(19) **Europäisches Patentamt European Patent Office Office européen des brevets**

(11) **EP 3 238 936 B1**

(12) **EUROPEAN PATENT SPECIFICATION**

(45) Date of publication and mention of the grant of the patent:
**13.09.2023 Bulletin 2023/37**

(21) Application number: **15873108.3**

(22) Date of filing: **22.12.2015**

(51) International Patent Classification (IPC):
**B32B 27/10** $^{(2006.01)}$  **B65D 65/40** $^{(2006.01)}$
**B65D 81/38** $^{(2006.01)}$  **C08J 9/12** $^{(2006.01)}$
**C08L 23/08** $^{(2006.01)}$  **B32B 5/20** $^{(2006.01)}$
**B32B 5/22** $^{(2006.01)}$  **B32B 27/16** $^{(2006.01)}$
**B32B 27/18** $^{(2006.01)}$  **B32B 27/32** $^{(2006.01)}$
**B32B 29/00** $^{(2006.01)}$  **B32B 1/02** $^{(2006.01)}$

(52) Cooperative Patent Classification (CPC):
**B32B 27/10; B32B 1/02; B32B 5/20; B32B 5/22; B32B 27/16; B32B 27/18; B32B 27/32; B32B 29/007; C08J 9/12; C08L 23/08;**
B32B 2250/02; B32B 2250/03; B32B 2266/0214; B32B 2266/025; B32B 2270/00;                (Cont.)

(86) International application number:
**PCT/JP2015/085893**

(87) International publication number:
**WO 2016/104540 (30.06.2016 Gazette 2016/26)**

(54) **RESIN COMPOSITION FOR EXPANDABLE LAMINATE, EXPANDABLE LAMINATE, METHOD FOR MANUFACTURING SAME, AND EXPANDED CONVERTED PAPER AND HEAT-INSULATING CONTAINER USING SAME**

HARZZUSAMMENSETZUNG FÜR EXPANDIERBARES LAMINAT, EXPANDIERBARES LAMINAT, VERFAHREN ZUR HERSTELLUNG DAVON SOWIE EXPANDIERTES UMGEWANDELTES PAPIER UND WÄRMEDÄMMENDER BEHÄLTER DAMIT

COMPOSITION DE RÉSINE POUR STRATIFIÉ EXPANSIBLE, STRATIFIÉ EXPANSIBLE, SON PROCÉDÉ DE FABRICATION, ET PAPIER TRANSFORMÉ EXPANSÉ ET RÉCIPIENT THERMO-ISOLANT UTILISANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2014 JP 2014259252**

(43) Date of publication of application:
**01.11.2017 Bulletin 2017/44**

(73) Proprietor: **Japan Polyethylene Corporation Tokyo 100-8251 (JP)**

(72) Inventors:
• **SASAKI Keiichi**
  **Kawasaki-shi**
  **Kanagawa 210-0863 (JP)**
• **SAKAMOTO Shinji**
  **Kawasaki-shi**
  **Kanagawa 210-0863 (JP)**

(74) Representative: **Müller-Boré & Partner Patentanwälte PartG mbB Friedenheimer Brücke 21 80639 München (DE)**

(56) References cited:
**EP-A2- 0 600 482          JP-A- H11 302 466**
**JP-A- 2010 144 134     JP-A- 2010 285 586**
**JP-A- 2013 078 928     JP-A- 2014 124 796**
**JP-A- 2014 124 797     JP-A- 2014 201 604**
**JP-A- 2014 201 604**

- **DATABASE WPI Week 201104 Thomson Scientific, London, GB; AN 2010-Q61978 XP002775781, -& JP 2010 285586 A (NIPPON POLYETHYLENE KK) 24 December 2010 (2010-12-24)**

(52) Cooperative Patent Classification (CPC): (Cont.)
B32B 2307/304; B32B 2307/50; B32B 2307/51; B32B 2307/70; B32B 2307/714; B32B 2307/72; B32B 2307/7242; B32B 2307/7246; B32B 2439/02; B32B 2439/70

**Description**

Technical Field

The present invention relates to a a foamable laminate and a foamed converted paper and a heat insulating container using the foamed laminate. More specifically, it relates to a foamable laminate which, by heating, gives foamed cells having sufficient height and good appearance (foamed layer) with good productivity and a foamed converted paper and a heat insulating container using the foamed laminate.

Background Art

Heretofore, as a container having heat insulating properties, synthetic resin-made foamed products have been frequently used. As a container that is easy to dispose and has good printability, there are known a heat insulating paper container which uses a plurality of sheets of paper and a paper container which uses a material of a paper substrate both sides of which are laminated with a polyethylene-based resin layer and has heat insulating properties imparted by foaming the polyethylene-based resin layer on the surface.

As a technique of using paper as a substrate, there is known a technique of extrusion-laminating polyethylene on at least one side of paper, forming a vapor pressure-retaining layer on the other side thereof, and heating it, thereby producing a converted paper having an irregular embossed pattern on the surface thereof (for example, see Patent Literature 1).

Moreover, there is proposed a technique of laminating or attaching a thermoplastic resin film on the wall surface on one side of a body part and subsequently heating it to foam the film, thereby forming a foamed heat insulating layer (for example, see Patent Literature 2).

Also, in a paper-made container composed of a container body part and a bottom part, there is proposed a technique of printing a part of the outer wall surface of the container body part with an organic solvent-containing ink, covering all the outer wall surface of the body part with a thermoplastic synthetic resin film, and heating the resulting paper container, thereby providing a relatively thick foamed layer in the printed portion (for example, see Patent Literature 3).

Further, there is proposed a foamed converted paper composed of a laminate that comprises, from the outer face side thereof, at least a foamed layer of an ethylene-$\alpha$-olefin copolymer produced through polymerization with a single-site catalyst, a substrate layer mainly composed of paper, and a thermoplastic resin layer and the laminate (for example, see Patent Literatures 4, 5). The thus-obtained, converted paper having a foamed layer and the foamed laminate have, when the foamable layer is foamed to form a container, advantages in that they fit comfortably in hand and hardly slip, they are excellent in heat insulating properties, and also, as compared with heat insulating containers that use plural sheets of paper, they cost low.

Patent Literature 6 shows a body part material sheet for paper-made containers, in which a thermoplastic resin in a molten state is extrusion-laminated on at least one side of the paper substrate of the body member material sheet in the paper container in such a manner that a period of time required for traveling the resin from the T-die to the contact with the paper substrate is controlled to from 0.11 to 0.33 seconds, and the literature describes a composition whose MFR is controlled by mixing two types of low-density polyethylene. JP 2010 285586 A discloses a foamable laminate comprising a polyethylene-based resin layer on one side of a substrate mainly composed of paper; and a thermoplastic resin layer comprising a thermoplastic resin on the other side of the substrate, wherein the polyethylene-based resin layer is a layer foamable by a vapor released from the substrate by heating, the thermoplastic resin layer is a layer capable of retaining a vapor released from the substrate, wherein the polyethylene-based resin is characterised by a melt flow rate (MFR) measured based on JIS K7210 of 0.01-100 g/10min, a density based on JIS-K7112 of 0.880-0.960g/cm3 and a memory effect (ME) measured according to JIS K7210 of 1.5 or more, and wherein the polyethylene-based resin composition may comprise antioxidants.

However, with regard to conventional laminates having a foamable layer and converted paper that uses the same, in the case where a machining speed is made a certain rate or more, there occur some problems in that the appearance may worsen at the time of foaming by heating. Therefore, there is desired such an improvement that foamed cells having sufficient height and good appearance are formed even in the case of high-speed machining.

Prior Art Literatures

Patent Literatures

Patent Literature 1: JP-B-48-32283
Patent Literature 2: JP-A-57-110439
Patent Literature 3: JP-A-07-232774
Patent Literature 4: JP-A-10-128928
Patent Literature 5: JP-A-2007-168178
Patent Literature 6: JP-A-2008-105747

Summary of the Invention

Problems that the Invention is to Solve

In consideration of the above-mentioned problems, an object of the invention is to provide a foamable laminate which, by heating, gives foamed cells having sufficient height and good appearance (foamed layer) with good productivity, a foamed converted paper having the foamed layer, and a heat insulating container such as a cup using the foamable laminate.

Means for Solving the Problems

As a result of extensive and intensive studies for solving the above problems, in a polyethylene resin composition for a foamable laminate, the present inventors have controlled MFR, the density, and the memory effect (ME) of a polyethylene-based resin (A) contained in the polyethylene resin composition to specific ranges and the oxygen induction time (OIT) of the polyethylene resin composition to a specific range.

In the case where the polyethylene resin composition is used as a production material at the time of forming a polyethylene-based resin layer (I) on the surface of a substrate mainly composed of paper, deterioration of polyethylene in an extruder can be suppressed. Further, they have found that appearance of foaming of the foamable laminate can be made good even if the laminate is a foamable laminate produced by high-speed machining at laminate foaming. Thus, they have accomplished the present invention.

That is, according to the invention of the present invention, there is provided a foamable laminate according to claim 1 comprising: a polyethylene-based resin layer (I) on one side of a substrate mainly composed of paper; and a thermoplastic resin layer (II) comprising a thermoplastic resin (B) on the other side of the substrate, wherein the polyethylene-based resin layer (I) is a layer foamable by a vapor released from the substrate by heating, the thermoplastic resin layer (II) is a layer capable of retaining a vapor released from the substrate, and the thermoplastic resin layer (II) comprises a thermoplastic resin (B) having the following nature (b-1): (b-1) the melting point (Tm(b)) is from 100 to 140°C, and wherein the polyethylene-based resin layer (I) comprises a polyethylene-based resin (A) and an antioxidant, and satisfies the following properties (a-1) to (a-5):

(a-1) the melt flow rate (MFR) of the polyethylene-based resin (A) as measured in accordance with JIS K7210 (190°C, a load of 21.18N) is 7 g/10 minutes or more and less than 20 g/10 minutes,
(a-2) the density of the polyethylene-based resin (A) in accordance with JIS K7112 at a test temperature of 23°C is from 0.900 to 0.930 g/cm3,
(a-3) the oxygen induction time (OIT) at 180°C, as determined according to JIS K6774 (1998), Annex 2, is 10 minutes or more and less than 190 minutes,
(a-4) the memory effect (ME) of the polyethylene-based resin (A), as measured using a melt indexer to be used in JIS K7210 and under conditions of a cylinder temperature of 240°C and a constant-rate extrusion output of 3 g/minute is less than 2.0,
(a-5) the amount of the antioxidant in the polyethylene resin composition is 150 ppm or more and 2000 ppm or less.

Further, there is provided a foamed converted paper according to claim 9 wherein the polyethylene-based resin layer (I) of the foamable laminate is in a foamed state.

Preferred embodiments are covered by the dependent claims.

Advantage of the Invention

The present invention is a foamable laminate comprising a polyethylene resin composition containing a polyethylene-based resin, which has specific MFR and density and in which the OIT value is a value falling within a specific range and the memory effect (ME) falls within a specific range, as a production material of a laminate having a substrate mainly composed of paper and a polyethylene-based resin layer that is foamed by a vapor or the like released from the paper substrate by heating on at least one side of the substrate mainly composed of paper.

By using the above resin, even in the case where the machining speed at the time of laminate forming is made high, a foamed laminate that gives good appearance of foaming in a foamable laminate to be foamed by a gas such as water vapor or volatile gas released from the substrate mainly composed of paper by heating, and a foamed converted paper and a heat insulating container such as a cup using the same can be produced. Moreover, thereby, a foamed laminate having good appearance of foaming and a foamed converted paper and a heat insulating container such as a cup using the same are stably obtained and thus they can be provided with good productivity.

Modes for Carrying Out the Invention

The following will describe the polyethylene resin composition for a foamable laminate of the present invention, a method for producing the foamable laminate, and the foamable laminate obtained by the method and the foamed converted paper and the heat insulating container using the foamable laminate in detail for every item.

1. Polyethylene Resin Composition for Foamable Laminate

The polyethylene resin composition for a foamable laminate of the invention has the following properties (a-1) to (a-4):

(a-1) the melt flow rate (MFR) of the polyethylene-based resin (A) as measured in accordance with JIS K7210 (190°C, a load of 21.18N) is 7 g/10 minutes or more and less than 20 g/10 minutes,
(a-2) the density of the polyethylene-based resin (A) in accordance with JIS K7112 at a test temperature of 23°C is from 0.900 to 0.930 g/cm$^3$,
(a-3) the oxygen induction time (OIT) at 180°C is 10 minutes or more and less than 190 minutes,
(a-4) the memory effect (ME) of the polyethylene-based resin (A) as measured using a melt indexer to be used in JIS K7210 and under conditions of a cylinder temperature of 240°C and a constant-rate extrusion output of 3 g/minute is less than 2.0,
(a-5) the amount of the antioxidant in the polyethylene resin composition is 150 ppm or more and 2000 ppm or less.

The polyethylene resin composition contains a polyethylene-based resin (A). The polyethylene-based resin (A) may be one kind thereof or may be plural kinds thereof. When the polyethylene-based resin contained in the polyethylene resin composition of the invention is one kind thereof, the above properties (a-1) to (a-4) correspond to properties of the polyethylene-based resin and, when the polyethylene-based resin contained in the polyethylene resin composition of the invention is plural kinds thereof, the properties correspond to properties of the mixture of the plural kinds of polyethylene-based resins.

As the polyethylene-based resin (A), for example, there may be exemplified ethylene homopolymer, ethylene/a-olefin copolymers, high-pressure radical polymerization process low-density polyethylene, ethylene copolymers, and mixtures thereof.

As monomers to be copolymerized with ethylene in the ethylene copolymers, for example, there may be exemplified conjugated dienes (for example, butadiene and isoprene), non-conjugated dienes (for example, 1,4-pentadiene), acrylic acid, acrylic acid esters (for example, methyl acrylate and ethyl acrylate), methacrylic acid, methacrylic acid esters (for example, methyl methacrylate and ethyl methacrylate), vinyl acetate ethylene, and the like.

As the polyethylene-based resin (A), preferred is low-density polyethylene obtained by a high-pressure radical polymerization process (high-pressure radical polymerization process low-density polyethylene). The high-pressure radical polymerization process low-density polyethylene is produced by bulk or solution polymerization in the presence of a radical initiator such as oxygen or an organic peroxide under ultrahigh pressure of 1000 to 4000 atm.

Further, as the low-density polyethylene obtained by the high-pressure radical polymerization process, there exist low-density polyethylene obtained by an autoclave reactor and low-density polyethylene obtained by a tubular reactor. Depending on the difference in the reaction mode, low-density polyethylene having different molecular weight distribution is obtained.

(a-1) MFR

In the invention, the melt flow rate (MFR) of the polyethylene-based resin (A) contained in the polyethylene resin composition is 7 g/10 minutes or more and less than 20 g/10 minutes. It is preferably 9 g/10 minutes or more and less than 20 g/10 minutes, more preferably from 11 to 18 g/10 minutes, and further preferably from 12 to 16 g/10 minutes.

When MFR of the polyethylene-based resin (A) is less than 7 g/10 minutes, the foamed cells do not grow large. On the other hand, when MFR is more than 20 g/10 minutes, the cells may break at the time of foaming. Thus, the cases are not preferred. Here, MFR is a value measured in accordance with JIS-K7210 (1999) (190°C, a load of 21.18 N).

(a-2) Density

In the invention, the density of the polyethylene-based resin (A) contained in the polyethylene resin composition is from 0.900 to 0.930 g/cm$^3$. It is preferably from 0.905 to 0.930 g/cm$^3$, more preferably from 0.910 to 0.930 g/cm$^3$.

When the density of the polyethylene-based resin (A) is less than 0.900 g/cm$^3$, the resin layer may slip poorly and its handling ability becomes worse, so that the case is not preferred. When the density exceeds 0.930 g/cm$^3$, it is necessary to elevate the temperature for foaming, so that the case is not preferred.

Here, the density is a value measured at a test temperature of 23°C in accordance with JIS K7112 (1999).

(a-3) OIT

In the invention, the oxygen induction time (OIT) of the polyethylene resin composition at 180°C is 10 minutes or more. It is preferably 20 minutes or more, more preferably 30 minutes or more. Moreover, the oxygen induction time (OIT) of the polyethylene-based resin at 180°C is less than 190 minutes, more preferably less than 80 minutes.

In the case where OIT of the polyethylene resin composition at 180°C is less than 10 minutes, the foamed cells becomes too large in the case where the machining speed is high at the time of laminate forming, so that the case is not preferred. On the other hand, in the case where OIT is 190 minutes or more, the adhesion to the paper substrate becomes worse and bad appearance of foaming occurs, so that the case is not preferred.

The "OIT (Oxygen induction time) at 180°C" means "necessary time from the time point when a sample is heated until the temperature reaches the predetermined temperature (180°C) under a nitrogen atmosphere and the gas is switched to oxygen when the temperature is stabilized to the time point when the sample subsequently starts to generate heat through oxidation". The "necessary time to the time point when the sample starts to generate heat" is, for example, necessary time from the time point when the temperature elevation is started to the time point when heat generation starts, which is measured using a thermal analyzer based on the descriptions of "JIS K6774 (1998) Annex 2 (prescription) Test Method for Thermal Stability" and the like. Specific measurement method is as described in the paragraph of Examples.

In order to control the oxygen induction time (OIT) of the polyethylene resin composition at 180°C to the above range, for example, there may be mentioned a method of controlling the amount of an antioxidant to be contained in the polyethylene resin composition to a predetermined range.

Specifically, the amount of the antioxidant to be contained in the polyethylene resin composition of the invention is 150 ppm or more, more preferably 300 ppm or more. Also, the amount of an antioxidant to be contained in the polyethylene resin composition of the invention is less than 2000 ppm, preferably less than 650 ppm, more preferably less than 300 ppm.

When the amount of the antioxidant is less than 80 ppm, the foamed cells become too large in the case where the machining speed is high at the time of laminate forming, so that the case is not preferred. On the other hand, in the case where the amount of the antioxidant is 2000 ppm or more, the adhesion to the paper substrate becomes worse and bad appearance of foaming occurs, so that the case is not preferred. Here, in the invention, ppm shows a weight ratio.

Examples of the antioxidant include phenol-based ones such as butylhydroxytoluene, 4-hydroxymethyl-2,6-di-t-butylphenol, 2,6-di-t-butyl-4-ethylphenol, n-octadecyl-β-(4'-hydroxy-3',5'-di-t-butylphenyl)propionate, tocopherol, 2,4-bis(octylthiomethyl)-6-t-methylphenol, 2,4-bis[(dodecylthio)methyl]-6-methylphenol, 2,2'-methylenebis(4-methyl-6-t-butylphenol), 2,2'-methylenebis(4-ethyl-6-t-butylphenol), 4,4'-methylenebis(2,6-di-t-butylphenol), 4,4'-butylidenebis(6-t-butyl-m-cresol), 4,4'-thiobis(6-t-butyl-m-cresol), N,N'-hexamethylenebis(3,5-di-t-butyl-4-hydroxyhydrocinnamide), 3,5-di-t-butyl-4-hydroxybenzylphosphonic acid monoethyl ester calcium salt, hexamethylenebis(3,5-di-t-butyl-4-hydroxyhydrocinnamate), triethylene glycol bis-3-(3-t-butyl-4-hydroxy-5-methylphenyl)propionate, 2,2'-oxamidobis[ethyl-3-(3,5-di-t-butyl-4-hydroxyphenyl)propionate], 2,2'-5-ethylidenebis(4,6-di-t-butylphenol), N,N'-1,3-propanediylbis-3,5-di-t-butyl-4-hydroxyhydrocinnamide), 2,4-dimethyl-6-(1-methylpentadecyl)phenol, 2-(2'-hydroxy-5'-methylphenyl)benzotriazole, 2-(2'-hydroxy-3'-t-butyl-5'-methylphenyl)-5-chlorobenzotriazole, 2,5-bis[5'-t-butylbenzoxazolyl(2)]-thiophene, [bis(3,5-di-t-butyl-4-hydroxybenzylphosphonic acid monoethyl ester) nickel salt, methyl salicylate, p-methoxyphenol, phenyl salicylate, 2-(2H-benzotriazol-2-yl)-4-(1,1,3,3-tetramethylbutyl)phenol, 2-(2H-benzotriazol-2-yl)-4,6-bis(1-methyl-1-phenylethyl)phenol, 4-benzoxazolyl-(2)-4'[5-methylbenzoxazolyl-(2)]-stilbene, hexadecyl-3,5-di-t-butyl-4-hydroxybenzoate, 2,2'-methylenebis[4-(1,1,3,3-tetramethylbutyl)-6-(2H-benzo[d]triazol-2-yl)phenol], 2,4-di-t-butyl-6-(5-chlorobenzotriazol-2-yl)phenol, and 2-cyano-3,3-diphenylacrylic acid-2-ethylhexyl; thio ether-based ones such as dilauryl thiodipropionate and distearyl thiodipropionate; phosphorus-based ones such as tris(nonylphenyl) phosphite, distearyl pentaerythritol diphosphite, tris(2,4-di-t-butylphenyl) phosphite, 4,4'-butylidene-bis(3-methyl-6-t-butylphenyl ditridecyl phosphite), tris(cyclohexylphenyl) phosphite, tris-[2-(2,4,8,10-tetrabutyl-5,7-dioxa-6-phosphodibenzo-{a,c}cyclohepten-6-yl-oxy)ethyl]a mine, bis-[2-methyl-4,6-bis-(1,1-dimethylethyl)phenyl] ethyl phosphite, 3,9-bis{2,4-bis(1-methyl-1-phenylethyl)phenoxy}-2,4,8,10-tetraoxa-3,9-diphosphaspiro[5, 5]undecane, 6-[3-(3-t-butyl-4-hydroxy-5-methylphenyl)propoxy-2,4,8,10-tetra-t-butylbenz[d,f][1,3,2]di oxaphosphepine, 9,10-dihydro-9-oxa-10-phosphaphenanthren-10-oxide, 3,9-bis(2,6-di-t-butyl-4-methylphenoxy)-2,4,8,10-tetraoxa-3,9-diphosphaspiro[5,5]undecan e, and carbetoxymethyl diethyl phosphonate, and the like, but the antioxidants are not limited thereto.

(a-4) Memory effect (ME)

In the invention, the memory effect (ME) of the polyethylene-based resin (A) contained in the polyethylene resin composition is less than 2.0. It is preferably 1.9 or less, more preferably 1.85 or less.

When the memory effect (ME) of the polyethylene-based resin (A) is 2.0 or more, the appearance of foaming becomes worse in the case where the machining speed is high, so that the case is not preferred. Here, the memory effect (ME) is a value measured using a melt indexer to be used in JIS K7210 (1999) and under conditions of a cylinder temperature of 240°C and a constant-rate extrusion output of 3 g/minute.

In addition, if necessary, the polyethylene resin composition for a foamable laminate of the invention may contain additives such as neutralizers such as metal soap, antiblocking agents, lubricants, dispersants, colorants such as pigments and dyes, antifogging agents, antistatic agents, UV absorbents, light stabilizers, and nucleating agents within ranges where the properties of the polyethylene-based resin (A) are not impaired.

Within a range where the properties of the polyethylene-based resin (A) are not impaired, any other thermoplastic resin may be blended into the resin composition. As the thermoplastic resin, there may be mentioned other polyolefin resins, polyester resins, polyvinyl chloride resin, polystyrene resin, and the like.

The polyethylene-based resin (A) is not particularly limited so long as it satisfies the above properties. As the polyethylene-based resin (A), preferably, there may be mentioned one prepared by adding a radical generator to high-pressure radical polymerization process low-density polyethylene and performing a radical reaction.

Examples of the radical generator include organic peroxides, dihydroaromatics, dicumyl compounds, and the like. Examples of the organic peroxides include (i) hydroperoxides such as t-butyl hydroperoxide, cumene hydroperoxide, and 1,1,3,3-tetramethylbutyl hydroperoxide; (ii) ketone peroxides such as methyl ethyl ketone peroxide, methyl isobutyl ketone peroxide, acetylacetone peroxide, and cyclohexanone peroxide; (iii) diacyl peroxides such as isobutyryl peroxide, lauroyl peroxide, and benzoyl peroxide; (iv) dialkyl peroxides such as dicumyl peroxide, 2,5-dimethyl-2,5-di(t-butylperoxy)hexane, t-butylcumyl peroxide, di-t-butyl peroxide, 2,5-dimethyl-2,5-di-(t-butylhexyne)-3, and di-t-amyl peroxide; (v) peroxyketals such as 2,2-di-(t-butylperoxy)butane; (vi) alkyl peresters such as t-hexyl peroxypivalate, t-butyl peroxypivalate, t-amyl peroxy2-ethylhexanoate, t-butyl peroxy2-ethylhexanoate, t-butyl peroxyisobutyrate, and t-butyl peroxybenzoate; (vii) percarbonates such as bis(4-t-butylcyclohexyl) peroxy dicarbonate, diisopropyl peroxy dicarbonate, and t-amyl peroxy isopropyl carbonate; (viii) cyclic organic peroxides such as 3,6,9-triethyl-3,6,9-trimethyl-1,4,7-triperoxonan. Of these, preferred are cyclic organic peroxides.

The amount of the radical generator to be blended is not particularly limited but is preferably 0.5 parts by weight or less, particularly preferably 0.1 parts by weight or less relative to 100 parts by weight of the polyethylene-based resin (A). When the amount of the radical generator to be blended exceeds 0.5 parts by weight, the flowability becomes worse.

2. Foamable Laminate

The invention provides a foamable laminate comprising at least a polyethylene-based resin layer (I) on one side of a substrate mainly composed of paper and, on the other side of the substrate, a thermoplastic resin layer (II) that retains a vapor released from the substrate, wherein the polyethylene-based resin layer (I) is composed of the above specific polyethylene-based resin (A) and the thermoplastic resin layer (II) comprises a thermoplastic resin (B) having a melting point (Tm(b)) of from 100 to 140°C.

(1) Substrate Mainly Composed of Paper

The substrate mainly composed of paper of the invention is not particularly limited so long as it can foam the polyethylene-based resin layer (I) on the surface by a vapor or a volatile matter contained in the substrate. For example, there may be mentioned high-quality paper, kraft paper, art paper, and the like. The substrate mainly composed of paper may be coated with a substance that generates a volatile gas by heating, or a substance that generates a volatile gas by heating may be blended into the paper substrate.

In the substrate mainly composed of paper, figures, letters, patterns or the like may be printed with ink or the like on paper such as pulp paper or synthetic paper. The paper used for the substrate preferably has a unit weight of from 100 to 400 g/m$^2$, particularly preferably from 150 to 350 g/m$^2$. The water content of the paper is, for example, from 4 to 10%, preferably from 5 to 8% or so. The paper substrate may be subjected to printing thereon.

(2) Polyethylene-based Resin Layer (I)

For the resin constituting the polyethylene-based resin layer (I) according to the foamable laminate of the invention, the above polyethylene-based resin (A) is used. For forming uniform foamed cells at a high expansion ratio, the polyethylene-based resin (A) is preferably selected so as to have a melting point falling within a range of from 80 to 120°C, preferably within a range of from 90 to 115°C or so. The polyethylene-based resin layer (I) is foamed by the vapor or volatile matter contained in the substrate.

The thickness of the polyethylene-based resin layer (I) is not particularly limited but is, for example, from 20 to 100 μm and, from the viewpoint of increasing the thickness of the foamed layer, is preferably from 30 to 100 μm. When the thickness of the polyethylene-based resin layer (I) is less than 20 μm, it is difficult to make the thickness of the foamed layer sufficiently high.

If necessary, the polyethylene-based resin layer (I) for use in the invention may be subjected to printing or the like thereon. The printing may be partially or entirely performed with a color ink. For the position to be printed, the size of the area to be printed, the printing method, and the ink to be used, conventionally known techniques may be suitably selected and used.

(3) Thermoplastic Resin Layer (II)

The thermoplastic resin layer (II) for use in the foamable laminate of the invention plays a role of retaining the vapor or the like released from the substrate.

The thermoplastic resin (B) constituting the thermoplastic resin layer (II) may be a resin having a higher melting point than that of the polyethylene-based resin (A) that forms the polyethylene-based resin layer (I), or a non-melting resin and is not particularly limited. In order to preferentially foam the polyethylene-based resin layer (I) to easily obtain uniform and high cell thickness, the melting point difference between the polyethylene-based resin (A) that is foamed by the vapor or the like released from the substrate by heating and the thermoplastic resin (B) that retains the vapor or the like released from the substrate preferably satisfies the following formula (1):

$$Tm(b) - Tm(a) \geq 10 \qquad (formula\ 1)$$

wherein Tm(a): the melting point (°C) of the polyethylene-based resin (A) of the polyethylene-based resin layer (I); Tm(b): the melting point (°C) of the thermoplastic resin (B) of the thermoplastic resin layer (II).

Examples of the thermoplastic resin (B) for use in the invention include polyolefin-based resins such as $\alpha$-olefin homopolymers having 2 to 10 carbon atoms, such as high-density polyethylene, middle-density polyethylene, low-density polyethylene, polypropylene-based resin, polybutene-1 resin, and poly-4-methyl-pentene-1 resin, and their mutual copolymers; polyamide-based resins, polyester-based resins, saponified products of ethylene-vinyl acetate copolymers, vinyl chloride resins, vinylidene chloride resins, polystyrene resins and their mixtures, and the like. Of these, preferred are polyolefin-based resins such as high-density polyethylene, middle-density polyethylene, and linear low-density polyethylene.

As the thermoplastic resin (B), there may be exemplified polyolefin-based resins, e.g., polyolefins such as ethylene homopolymer, ethylene/$\alpha$-olefin copolymer, high-pressure radical polymerization process low-density polyethylene, ethylene copolymers, and polypropylene, their mixtures, and the like.

As monomers that copolymerize with ethylene in the ethylene copolymers, there may be exemplified conjugated dienes (for example, butadiene and isoprene), non-conjugated dienes (for example, 1,4-pentadiene), acrylic acid, acrylic acid esters (for example, methyl acrylate and ethyl acrylate), methacrylic acid, methacrylic acid esters (for example, methyl methacrylate and ethyl methacrylate), vinyl acetate ethylene, and the like.

In the case where a polyethylene-based resin is employed as the thermoplastic resin (B), MFR is from 2.0 to 15 g/10 minutes. It is preferably from 3.0 to 14 g/10 minutes, more preferably from 4.0 to 13 g/10 minutes.

When MFR of the thermoplastic resin (B) is less than 2.0 g/10 minutes, high-speed machining ability at the time of extrusion lamination becomes worse and, when it exceeds 15 g/10 minutes, there is a concern that the extrusion lamination ability becomes unstable, so that the cases are not preferred.

In the case where a polyethylene-based resin is employed as the thermoplastic resin (B), the density is from 0.930 to 0.970 g/cm$^3$. It is preferably from 0.930 to 0.965 g/cm$^3$, more preferably from 0.930 to 0.960 g/cm$^3$ or so.

When the density of the thermoplastic resin (B) is less than 0.930 g/cm$^3$, the lamination-formed resin may slip poorly and its handling ability becomes worse and, when it exceeds 0.970 g/cm$^3$, there is a concern that the extrusion lamination ability becomes unstable, so that the cases are not preferred.

Moreover, the melting point of the thermoplastic resin (B), Tm(b), is from 100 to 140°C. It is preferably selected from the range of preferably from 110 to 140°C, more preferably from 115 to 140°C.

When the melting point of the thermoplastic resin (B) is lower than 100°C, the heat resistance may be insufficient and there is a concern that the thermoplastic resin layer may foam and, when it exceeds 140°C, there is a concern that the low-temperature heat-sealability may become poor, so that the cases are not preferred.

In the case where a resin poorly adhesive to the paper substrate, such as a polyamide-based resin, a polyester-based resin, a saponified product of ethylene/vinyl acetate copolymer, vinyl chloride resin, vinylidene chloride resin, or polystyrene resin is used, a laminate may be formed through an ordinary adhesive resin or the like, such as an unsaturated carboxylic acid-modified polyolefin resin, an ethylene/unsaturated carboxylic acid copolymer or the like.

If necessary, into the thermoplastic resin (B), there may be blended additives such as phenol-based and phosphorus-based antioxidants, neutralizers such as metal soap, antiblocking agents, lubricants, dispersants, colorants such as pigments and dyes, antifogging agents, antistatic agents, UV absorbents, light stabilizers, and nucleating agents within ranges where the properties of the thermoplastic resin are not impaired.

The thickness of the thermoplastic resin layer (II) is not particularly limited but is preferably selected generally from a range of from 10 to 100 $\mu$m, particularly from a range of from 20 to 100 $\mu$m, from the viewpoint of capability of increasing the thickness of the foamed layer.

When the thickness of the thermoplastic resin layer (II) is less than 10 $\mu$m, there is a concern that the layer cannot fully retain the vapor or the like released from the substrate and the thickness of the foamed layer cannot be sufficiently high. Moreover, when it exceeds 100 $\mu$m, any more improved effect cannot be expected and there is a concern that economical disadvantage may increase.

(4) Foamable Laminate

In the foamable laminate of the invention, within a range where the advantage of the invention is not impaired, any other layer may be provided between the layers of the laminate or as an additional inner layer and/or outer layer or the like. For example, one or more film layers, decorative layers, reinforcing layers, adhesive layers, barrier layers, or the like may be provided as additional inner layer(s) and/or outer layer(s) of the laminate in which the substrate and the polyethylene-based resin layer (I) and further the thermoplastic resin layer (II) are provided, or between these layers, like {polyethylene film layer/polyethylene-based resin layer (I)/substrate/thermoplastic resin layer (II)}, {polyethylene film layer/barrier layer/adhesive layer/polyethylene-based resin layer (I)/substrate/thermoplastic resin layer (II)}, {polyethylene-based resin layer (I)/substrate/thermoplastic resin layer (II)/barrier layer/thermoplastic resin layer (II)}, from the outside.

If necessary, the laminate may be subjected to printing or the like thereon. Printing may be performed with a color ink, partly or entirely on the surface thereof. Also, if necessary, using a foamable ink, a foamable site may be provided partly or entirely thereon. For the position to be printed, the size of the area to be printed, the printing method, and the printing ink, conventionally known techniques may be suitably selected and used.

Examples of the decorative layer include printed paper, film, non-woven fabric, woven fabric, and the like.

Moreover, the reinforcing layer is a layer that plays roles of preventing the foamed layer from bursting owing to excessive foaming and uniformly correcting uneven foamed cells, which is effected by laminating a polyethylene resin film or the like as an outer layer on the polyethylene-based resin layer (I) so that the foamed layer does not burst at the time of foaming by heating the polyethylene-based resin layer (I) having been laminated on the substrate, or a role of enhancing the mechanical strength, which is effected by laminating a film, a non-woven fabric, or the like thereon. As the resin, there is no particular limitation and may be a polyolefin-based resin such as polyethylene or polypropylene, a polyamide-based resin, a polyester-based resin, or the like.

As for the adhesive layer, examples of a resin forming the layer include a hot-melt such as a copolymer of ethylene with an unsaturated carboxylic acid or its derivative, a modified polyolefin resin of a polyolefin resin grafted with an unsaturated carboxylic acid or the like, or an ethylene/vinyl acetate copolymer and ordinary adhesives.

As for the barrier layer, examples of a resin forming the layer include polyamide-based resins, polyester-based resins, saponified products of ethylene/vinyl acetate copolymer (EVOH), polyvinylidene chloride resins, polycarbonate-based resins, oriented polypropylene (OPP), oriented polyesters (OPET), oriented polyamides, inorganic oxide-deposited films such as alumina-deposited film and silica-deposited film, metal-deposited films such as aluminum-deposited film, metal foils, and the like.

The method for producing the foamable laminate of the invention is not particularly limited so long as the method is a method capable of laminating the polyolefin polyethylene-based resin layer (I) and the thermoplastic resin layer (II) on both surfaces of the substrate mainly composed of paper. For example, there may be mentioned extrusion lamination of directly laminating a molten resin, sandwich lamination or dry lamination of laminating a previously-formed film, and the like.

The extrusion lamination is a method of continuously applying and press-adhering a molten resin film extruded out through a T-die, onto a substrate, and this is a forming method of achieving application and adhesion at a time. The extrusion lamination is preferably performed at a machining speed of 55 m/min or more. The sandwich lamination is a method of casting a molten resin into a space between paper and a film to be laminated thereon, in which the molten resin acts as an adhesive to achieve adhesion and lamination; and the dry lamination is a method of removing the ambient moisture around the adhesive via which paper and a film to be laminated are stuck together and/or the coating roll of the adhesive, or elevation the temperature of the adhesive and/or the coating roll of the adhesive by heating, or drying the surface of the film sheet to be stuck.

In the sandwich lamination and the dry lamination, as the film to be laminated between the substrate and the thermoplastic resin layer (II) on the side of the substrate mainly composed of paper for use in the invention, on which the thermoplastic resin layer (II) is formed, there may be mentioned an aluminum foil, a polyester-based film, various barrier films, or the like for the purpose of enhancing the barrier property.

3. Foamed Converted Paper

The foamed converted paper of the invention is obtained by heating the foamable laminate to foam the polyethylene-based resin layer (I). The height of the foamed cells of the foamed converted paper is preferably 200 μm or more, more preferably 250 μm or more. When the height of the foamed cells is less than 200 μm, sufficient heat insulating properties are not obtained.

The heating method is not particularly limited but there may be mentioned methods of heating with hot air, microwaves, high frequency waves, IR rays, far-IR rays, and the like. The heating temperature is not particularly limited but must be a temperature at which moisture in the paper is evaporated away and the foamable resin melts; thus, for example, the temperature is preferably from 100 to 200°C. The heating time is preferably from 10 seconds to 10 minutes. Within the above ranges, a sufficient foamed cell height is easily obtained. When the foamable resin of the invention is used, a foamed converted paper having good appearance of foaming can be obtained under the heating conditions.

The foamed paper is used needless-to-say as heat insulating/heat retaining materials for heat insulating containers such as cups to be mentioned below, and also as cushioning materials, sound insulating materials, formed papers, etc.; and is put to practical use as agricultural, industrial and household materials such as sleeve materials, paper dishes, trays, antislip materials, packaging materials for fruits, and foamed papers.

4. Heat insulating Container

The heat insulating container of the invention is obtained by shaping the above-mentioned foamable laminate into a container, then heating the container, and foaming the polyethylene-based resin layer (I).

Also in the heat insulating container, as in the above-mentioned foamed converted paper, the height of the foamed cells is preferably 200 μm or more, more preferably 250 μm or more. When the height of the foamed cells is 200 μm or more, sufficient heat insulating properties are easily obtained.

The thus obtained heat insulating container is used as a trays, a cup, or the like. As its applications, there can be exemplified containers for hot drinks, cup soup, cup miso soup, cup noodle, and natto, microwave-safe containers, and the like.

As above, in the invention, for the polyethylene-based resin layer (I), which is foamed by a vapor released from a substrate mainly composed of paper by heating, on at least one side of the substrate, by using a polyethylene resin composition that contains a polyethylene-based resin (A) having a melt flow rate (MFR) of 7 g/10 minutes or more and less than 20 g/10 minutes, a density of from 0.900 to 0.930 g/cm$^3$, and a memory effect (ME) of less than 2.0 and has an oxygen induction time (OIT) of 10 minutes or more and less than 190 minutes, even in the case of machining under high-speed conditions at the time of extrusion lamination, a foamed layer having a high expansion ratio and uniform foamed cells is formed and thus a heat insulating container excellent in heat insulating properties and good appearance can be easily obtained.

Examples

The present invention will be described more specifically with reference to Examples but the invention is not limited to these Examples.

Incidentally, test methods for physical properties and obtained foamed laminates and the like in the present Examples are as follows.

1. Test Methods

[0083]

　(1) MFR: It was measured in accordance with JIS K7210 (1999) (190°C, a load of 21.18 N).

(2) Density: For a polyethylene-based resin (A), it was measured under the following conditions.

Pellets were hot-pressed into a pressed sheet having a thickness of 2 mm, the sheet was put into a 1000-ml beaker which was then filled with distilled water, and the beaker was covered with a watch glass and heated with a mantle heater. After the distilled water began to boil, it was boiled for 60 minutes and then the beaker was put on a wood rack and left to cool thereon. At this time, the amount of the distilled water after boiled for 60 minutes was controlled to 500 ml and the time required for cooling of the beaker to room temperature was controlled so as not to be 60 minutes or shorter. The test sheet was immersed nearly in the central part of water so as not to be in contact with the beaker and the water surface. The sheet was annealed under the conditions of 23°C and a humidity of 50% for a period of 16 hours or more and 24 hours or less and then punched to give a piece of 2 mm (length) × 2 mm (width). The punched one was measured at a test temperature of 23°C in accordance with JIS-K7112 (1999).

(3) Melting Point: Pellets were hot-pressed into a sheet, and punched with a punch to give a sample. Measurement was performed under the following conditions in a sequence of first temperature elevation, temperature lowering, and second temperature elevation, and the temperature at the maximum peak height during the second temperature elevation was taken as the melting point.

Device: DSC220 manufactured by Seiko Instruments
Temperature Elevation/Temperature Lowering Condition:

First Temperature Elevation: from 30°C to 200°C at 40°C/min
Temperature Lowering: from 200°C to 20°C at 10°C/min
Second Temperature Elevation: from 20°C to 200°C at 10°C/min

Temperature Retaining Time: 5 minutes after the first temperature elevation, and 5 minutes after the temperature lowering
Sample Amount: 5 mg
Temperature Calibration: indium
Reference: aluminum

(4) OIT (oxygen induction time): Cutting pellets to be targeted were cut into about 15 mg and were measured using a differential scanning calorimeter of DSC7020 type manufactured by SII Nano Technology Inc. The temperature was elevated at a temperature elevation rate of 20°C/min under nitrogen sealing at a nitrogen flow rate of 50 ml/min until 180°C and, after the temperature reached 180°C, nitrogen was stopped and switched to oxygen. Oxygen was allowed to flow at an oxygen flow rate of 50 ml/min and time required for sharp oxidation and heat generation from the start of oxygen flow (oxygen induction time) was measured on the calorimeter. The oxygen induction time was represented by the time period (minute) from the time point when the oxygen introduction was started to the intersection of an extension line of a base line and a tangential line drawn at the maximum inclination point of a heat-generation curve.

(5) Appearance Evaluation after Foaming

A laminate obtained in Example was cut into a piece of 10 cm × 10 cm and was allowed to stand in a perfect oven (PH-102 type manufactured by Espec) heated at 120°C for 360 seconds to achieve foaming. Thereafter, the sample was taken out and cooled to room temperature in the air.

The size of the foamed cells was projected from the lower part with a digital microscope (HDM-2100 manufactured by Scalar Corporation). After all the area of the foamed cells within a square range of 1.3 cm × 1.3 cm was measured, an average thereof was calculated. One having an average value exceeding 0.8 mm$^2$ was evaluated as bad appearance ($\times_\times$) and one having an average value of less than 0.8 mm$^2$ was evaluated as good appearance (C). Also, one having an average value of around 0.8 mm$^2$ was evaluated as (O-).

(6) Height of Foaming

The cross-section of the foamed product used in the above-described appearance evaluation was photographed with a digital microscope (HDM-2100 manufactured by Scalar Corporation) and then the height of the foamed face was measured at 10 points in the range of ....

(7) Tension Measurement after Heat Treatment (290°C-T)

An orifice having a nozzle diameter of 2.095 mm, a nozzle length of 8.0 mm, and an inflow angle of 180° (flat) was fitted to a CAPILLOGRAPH 1B (barrel diameter of 9.55 mm) manufactured by Toyo Seiki Seisaku-sho, Ltd. and the temperature in the oven was stabilized in a state of 290°C. Then, 15 g of a resin described in Example was filled therein and allowed to stand for 1 minute in a state that a piston was loaded. An aluminum plate filled with water was disposed at a position 450 mm blow from the outlet of the orifice. After standing for 1 minute, a molten resin was extruded into the aluminum plate filled with water at an extrusion rate of 500 mm/min and the rapidly cooled strand was collected. The collected strand was cut into granules to be a sample for measurement. The sample was measured under the following conditions using a CAPILLOGRAPH 1B manufactured by Toyo Seiki Seisaku-sho, Ltd. The value of melt tension is described as (290°C-T) in the present Description.

[Measurement Conditions]

Employed Model: CAPILLOGRAPH 1B manufactured by Toyo Seiki Seisaku-sho, Ltd.
Nozzle Diameter: 2.095 mm
Nozzle Length: 8.0 mm
Inflow Angle: 180° (flat)
Extrusion Rate: 10 mm/min
Receiving Rate: 1.0 m/min
Measurement Temperature: 130°C
Barrel Diameter: 9.55 mm
Stabilization Time after Sample Charging: 6 minutes
Distance from Orifice Outlet to Pulley: 500 mm

(8) ME (Memory Effect):

It was measured under the following conditions, using a melt indexer (a semiautomatic ME meter manufactured by Misuzu Erie) to be used in JIS K7210 (1999).

[Measurement Conditions]

The measurement was carried out under conditions of a cylinder temperature of 240°C and a constant-rate extrusion output of 3 g/minute.
A 2.095 mm$\phi$ nozzle for MFR measurement is set in a measuring device, and a resin is filled into a furnace. A piston is put on it and is kept for constant-rate extrusion at 0.09 g/minute for 5 minutes and then kept for constant-rate extrusion at 3 g/minute, and degassing is performed until the passage of 6 minutes and 30 seconds. After 6 minutes and 30 seconds, the strand is cut while still kept at 3 g/min; and at the time point when the strand length from the lower end of the orifice has reached 20 mm, the diameter of the strand is measured at the position of 15 mm from the lower end of the orifice, using a laser sizer (LS-3033) manufactured by KEYENCE. The measured diameter of the strand is represented by D, and the orifice diameter of the die is represented by DO (2.095 mm), and ME is determined according to the following formula (however, the measured value was represented after rounding to the first decimal place):

$$ME = D/D0$$

2. Resin

(1) Polyethylene-based Resin (A)

[Table 1]

Table 1

| Resin | MFR (g/10 min) | Density (g/cm$^3$) | Melting point (°C) | Reaction mode | |
|---|---|---|---|---|---|
| A1 | 14 | 0.918 | 106 | high-pressure process low-density polyethylene | autoclave |
| A2 | 15 | 0.918 | 106 | high-pressure process low-density polyethylene | autoclave |
| A3 | 8 | 0.918 | 106 | high-pressure process low-density polyethylene | autoclave |
| A4 | 20 | 0.917 | 105 | high-pressure process low-density polyethylene | autoclave |
| A5 | 22 | 0.918 | 106 | high-pressure process low-density polyethylene | tubular |
| A6 | 17 | 0.919 | 107 | ethylene-$\alpha$-olefin copolymer | autoclave |
| A7 | 9 | 0.922 | 110 | high-pressure process low-density polyethylene | autoclave |

(2) Thermoplastic Resin (B)

B1: a polyethylene resin having MFR of 10 g/10 min, a density of 0.936 g/cm$^3$, and Tm(b) of 129°C

(Comparative Example 1)

As a resin for use in the polyethylene-based resin layer (I), there was used a material of the high-pressure process low-density polyethylene (A1) to which any additive such as an antioxidant was not added.

A paper substrate having a unit weight of 320 g/m$^2$ and a water content of 7% was subjected to corona treatment (30 W.min/m$^2$) on one side thereof. Using an extrusion laminator with a 90 mm$\phi$ extruder having an air gap of 130 mm and a die effective width of 560 mm, a thermoplastic resin (B1) having MFR of 10 g/10 min, a density of 0.936 g/cm$^3$ and a melting point of 129°C, as a material constituting the thermoplastic resin layer (II), was extrusion-laminated thereon at a thickness of 40 $\mu$m at a resin temperature of 320°C and a machining speed of 50 m/min, thereby obtaining a laminate of the thermoplastic resin layer (II) and the paper substrate.

Next, the paper substrate surface of the laminate was subjected to corona treatment (30 W.min/m$^2$) on the side opposite to the side of the thermoplastic resin layer (II). Using an extrusion laminator with a 90 mm$\phi$ extruder having an air gap of 130 mm and a die effective width of 560 mm, the above-described polyethylene-based resin (A1), as a material constituting the polyethylene-based resin layer (I), was extrusion-laminated thereon at a thickness of 70 $\mu$m at a resin temperature of 320°C and a machining speed of 50 m/min and 70 m/min. The surface of the resulting polyethylene-based resin layer (I) of the foamable laminate was subjected to corona treatment (10 W.min/m$^2$), thereby obtaining a foamable laminate composed of the polyethylene-based resin layer (I), the paper substrate, and the thermoplastic resin layer (II).

The evaluation results of the obtained foamable laminate are shown in Table 2. A good result for appearance of foaming was obtained at a machining speed of 50 m/min but bad appearance of foaming was observed at a machining speed of 70 m/min.

(Comparative Example 2)

A foamable laminate was obtained in the same manner as in Comparative Example 1 except that, as a resin for use in the polyethylene-based resin layer (I), there was used a material of the high-pressure process low-density polyethylene (A2) to which any additive such as an antioxidant was not added.

The evaluation results of the obtained foamable laminate are shown in Table 2. A good result for appearance of foaming was obtained at a machining speed of 50 m/min but bad appearance of foaming was observed at a machining speed of 70 m/min.

13

(Comparative Example 3)

A foamable laminate was obtained in the same manner as in Comparative Example 1 except that, as a resin for use in the polyethylene-based resin layer (I), there was used a material of the high-pressure process low-density polyethylene (A3) to which any additive such as an antioxidant was not added.
The evaluation results of the obtained foamable laminate are shown in Table 2. A good result for appearance of foaming was obtained at a machining speed of 50 m/min but bad appearance of foaming was observed at a machining speed of 70 m/min.

(Comparative Example 4)

A foamable laminate was obtained in the same manner as in Comparative Example 1 except that, as a resin for use in the polyethylene-based resin layer (I), there was used a material of the high-pressure process low-density polyethylene (A3) to which 75 ppm of octadecyl-3-(3,5-di-tert-butyl-4-hydroxyphenyl)propionate and 75 ppm of tris(2,4-di-tert-butylphenyl) phosphite were added as antioxidants (a3-1).
The evaluation results of the obtained foamable laminate are shown in Table 2. A good result for appearance of foaming was obtained at a machining speed of 50 m/min but bad appearance of foaming was observed at a machining speed of 70 m/min.

(Comparative Example 5)

A foamable laminate was obtained in the same manner as in Comparative Example 1 except that, as a resin for use in the polyethylene-based resin layer (I), there was used a material of the high-pressure process low-density polyethylene (A4) to which 75 ppm of octadecyl-3-(3,5-di-tert-butyl-4-hydroxyphenyl)propionate and 75 ppm of tris(2,4-di-tert-butylphenyl) phosphite were added as antioxidants (a4-1).
The evaluation results of the obtained foamable laminate are shown in Table 2. A good result for appearance of foaming was obtained at a machining speed of 50 m/min but bad appearance of foaming was observed at a machining speed of 70 m/min.

(Example 1, reference example not according to the invention)

A foamable laminate was obtained in the same manner as in Comparative Example 1 except that, as a resin for use in the polyethylene-based resin layer (I), there was used a material of the high-pressure process low-density polyethylene (A1) to which 75 ppm of octadecyl-3-(3,5-di-tert-butyl-4-hydroxyphenyl)propionate and 75 ppm of tris(2,4-di-tert-butylphenyl) phosphite were added as antioxidants (a1-2).
The evaluation results of the obtained foamable laminate are shown in Table 3. Good appearance of foaming was observed both at a machining speed of 50 m/min and at a machining speed of 70 m/min.

(Example 2)

A foamable laminate was obtained in the same manner as in Comparative Example 1 except that, as a resin for use in the polyethylene-based resin layer (I), there was used a material of the high-pressure process low-density polyethylene (A1) to which 150 ppm of octadecyl-3-(3,5-di-tert-butyl-4-hydroxyphenyl)propionate and 150 ppm of tris(2,4-di-tert-butylphenyl) phosphite were added as antioxidants (a1-3).
The evaluation results of the obtained foamable laminate are shown in Table 3. Good appearance of foaming was observed both at a machining speed of 50 m/min and at a machining speed of 70 m/min.

(Example 3)

A foamable laminate was obtained in the same manner as in Comparative Example 1 except that, as a resin for use in the polyethylene-based resin layer (I), there was used a material of the high-pressure process low-density polyethylene (A2) to which 150 ppm of octadecyl-3-(3,5-di-tert-butyl-4-hydroxyphenyl)propionate and 150 ppm of tris(2,4-di-tert-butylphenyl) phosphite were added as antioxidants (a2-1).
The evaluation results of the obtained foamable laminate are shown in Table 3. Good appearance of foaming was observed both at a machining speed of 50 m/min and at a machining speed of 70 m/min.

(Example 4)

A foamable laminate was obtained in the same manner as in Comparative Example 1 except that, as a resin for use in the polyethylene-based resin layer (I), there was used a material of a polyethylene resin composition, which had been obtained by mixing 80% by weight of the high-pressure process low-density polyethylene-based resin (A2) with 20% by weight of the high-pressure radical polymerization process low-density polyethylene (A5) whose reaction mode was a tubular type, to which 150 ppm of octadecyl-3-(3,5-di-tert-butyl-4-hydroxyphenyl)propionate and 150 ppm of tris(2,4-di-tert-butylphenyl) phosphite were added as antioxidants (a2-2).
The evaluation results of the obtained foamable laminate are shown in Table 3. Good appearance of foaming was observed both at a machining speed of 50 m/min and at a machining speed of 70 m/min.

(Example 5)

A foamable laminate was obtained in the same manner as in Comparative Example 1 except that, as a resin for use in the polyethylene-based resin layer (I), there was used a material of a polyethylene resin composition, which had been obtained by mixing 40% by weight of the high-pressure process low-density polyethylene-based resin (A1) with 60% by weight of the ethylene-α-olefin copolymer (A6), to which 300 ppm of octadecyl-3-(3,5-di-tert-butyl-4-hydroxyphenyl)propionate and 300 ppm of tris(2,4-di-tert-butylphenyl) phosphite were added as antioxidants (a1-4).
The evaluation results of the obtained foamable laminate are shown in Table 3. Good appearance of foaming was observed both at a machining speed of 50 m/min and at a machining speed of 70 m/min.

(Example 6)

A foamable laminate was obtained in the same manner as in Comparative Example 1 except that, as a resin for use in the polyethylene-based resin layer (I), there was used a material of a polyethylene resin composition, which had been obtained by mixing 80% by weight of the high-pressure process low-density polyethylene-based resin (A1) with 20% by weight of the ethylene-α-olefin copolymer (A6), to which 300 ppm of octadecyl-3-(3,5-di-tert-butyl-4-hydroxyphenyl)propionate and 300 ppm of tris(2,4-di-tert-butylphenyl) phosphite were added as antioxidants (a1-5).
The evaluation results of the obtained foamable laminate are shown in Table 3. Good appearance of foaming was observed both at a machining speed of 50 m/min and at a machining speed of 70 m/min.

(Example 7)

A foamable laminate was obtained in the same manner as in Comparative Example 1 except that, as a resin for use in the polyethylene-based resin layer (I), there was used a material of the high-pressure process low-density polyethylene (A7) to which 150 ppm of octadecyl-3-(3,5-di-tert-butyl-4-hydroxyphenyl)propionate and 150 ppm of tris(2,4-di-tert-butylphenyl) phosphite were added as antioxidants (a7-1).
The evaluation results of the obtained foamable laminate are shown in Table 3. Good appearance of foaming was observed at a machining speed of 50 m/min. However, slight enlargement of formed cell size was observed (cell size of 0.8) at a machining speed of 70 m/min but the foaming state was good.

[Table 2]

Table 2

| Comparative Example | | 1 | 2 | 3 | 4 | 5 |
|---|---|---|---|---|---|---|
| Items | | A1 | A2 | A3 | a3-1 | a4-1 |
| MFR | g/10 min | 14 | 15 | 8 | 8 | 20 |
| Density | g/cm3 | 0.918 | 0.918 | 0.918 | 0.918 | 0.917 |
| Amount of antioxidant added | ppm | 0 | 0 | 0 | 150 | 150 |
| OIT | @180°C | 6 | 6 | 6 | 26 | 26 |
| 290°C-T | mN | 114 | 92 | 348 | 195 | 65 |

(continued)

| Comparative Example | | 1 | 2 | 3 | 4 | 5 |
|---|---|---|---|---|---|---|
| Items | | A1 | A2 | A3 | a3-1 | a4-1 |
| ME | 3g | 1.9 | 1.7 | 2.1 | 2.0 | 1.6 |
| Height of foaming | mm | 1.0 | 1.0 | 0.9 | 0.9 | 1.0 |
| Appearance of foaming | machining speed: 50 m | ○ | ○ | ○ | ○ | ○ |
| | machining speed: 70 m | × | × | × | × | × |

[Table 3]

Table 3

| | | Example | | | | | | | | | |
|---|---|---|---|---|---|---|---|---|---|---|---|
| Items | | 1 | 2 | 3 | 4 | | 5 | | 6 | | 7 |
| | | a1-2 | a1-3 | a2-1 | a2-2 | | a1-4 | | a1-5 | | a7-1 |
| | | | | | A2 | A5 | A1 | A6 | A1 | A6 | |
| MFR | g/10 min | 14 | 14 | 15 | 15 | 22 | 14 | 17 | 14 | 17 | 9 |
| Density | g/cm³ | 0.918 | 0.918 | 0.918 | 0.918 | 0.918 | 0.918 | 0.919 | 0.918 | 0.919 | 0.922 |
| Mixing ratio | % | - | - | - | 80 | 20 | 40 | 60 | 80 | 20 | - |
| Polyethylene resin | | high-pressure process low-density polyethylene | high-pressure process low-density polyethylene | high-pressure process low-density polyethylene | high-pressure process low-density polyethylene | high-pressure process low-density polyethylene | high-pressure process low-density polyethylene | ethylene-α-olefin copolymer | high-pressure process low-density polyethylene | ethylene-α-olefin copolymer | high-pressure process low-density polyethylene |
| Reaction mode | | autoclave | autoclave | autoclave | autoclave | tubular | autoclave | autoclave | autoclave | autoclave | autoclave |
| MFR of mixture | g/10 min | - | - | - | 16 | | 16 | | 15 | | - |
| Density of mixture | g/cm3 | - | - | - | 0.918 | | 0.919 | | 0.918 | | - |
| Amount of antioxidant added | ppm | 150 | 300 | 300 | 300 | | 600 | | 300 | | 300 |
| OIT | @180°C | 26 | 33 | 33 | 33 | | 56 | | 33 | | 33 |
| 290°C-T | mN | 107 | 89 | 74 | 62 | | 30 | | 72 | | 95 |
| ME | 3 g | 1.8 | 1.7 | 1.7 | 1.6 | | 1.6 | | 1.7 | | 1.7 |
| Height of foaming | mm | 1.0 | 1.0 | 1.0 | 1.1 | | 1.1 | | 1.1 | | 1.1 |

(continued)

| Items | | Example | | | | | | | | | |
|---|---|---|---|---|---|---|---|---|---|---|---|
| | | 1 | 2 | 3 | 4 | | 5 | | 6 | | 7 |
| | | a1-2 | a1-3 | a2-1 | a2-2 | | a1-4 | | a1-5 | | a7-1 |
| | | | | | A2 | A5 | A1 | A6 | A1 | A6 | |
| Appearance of foaming | machining speed: 50 m | ○ | ○ | ○ | ○ | | ○ | | ○ | | ○ |
| | machining speed: 70 m | ○ | ○ | ○ | ○ | | ○ | | ○ | | ○- |

Industrial Applicability

According to the present invention, there can be provided a polyethylene resin composition for a foamable laminate which, by heating, gives foamed cells having sufficient height and good appearance (foamed layer) with good productivity, a foamable laminate using the same, a foamed converted paper having the foamed layer, and a heat insulating container such as a cup using the foamable laminate, and a method for producing the same. Thus, the invention has high industrial applicability.

**Claims**

1.  A foamable laminate comprising: a polyethylene-based resin layer (I) on one side of a substrate mainly composed of paper; and a thermoplastic resin layer (II) comprising a thermoplastic resin (B) on the other side of the substrate,

    wherein the polyethylene-based resin layer (I) is a layer foamable by a vapor released from the substrate by heating,
    the thermoplastic resin layer (II) is a layer capable of retaining a vapor released from the substrate, and
    the thermoplastic resin layer (II) comprises a thermoplastic resin (B) having the following nature (b-1):
    (b-1) the melting point (Tm(b)) is from 100 to 140°C, and

    wherein the polyethylene-based resin layer (I) comprises a polyethylene-based resin (A) and an antioxidant, and satisfies the following properties (a-1) to (a-5):

    (a-1) the melt flow rate (MFR) of the polyethylene-based resin (A) as measured in accordance with JIS K7210 (190°C, a load of 21.18N) is 7 g/10 minutes or more and less than 20 g/10 minutes,
    (a-2) the density of the polyethylene-based resin (A) in accordance with JIS K7112 at a test temperature of 23°C is from 0.900 to 0.930 g/cm$^3$,
    (a-3) the oxygen induction time (OIT) at 180°C, as determined according to JIS K6774 (1998), Annex 2, and under the further measurement conditions indicated in the description, is 10 minutes or more and less than 190 minutes,
    (a-4) the memory effect (ME) of the polyethylene-based resin (A), as measured using a melt indexer to be used in JIS K7210 and under conditions of a cylinder temperature of 240°C and a constant-rate extrusion output of 3 g/minute and under the further measurement conditions indicated in the description, is less than 2.0,
    (a-5) the amount of the antioxidant in the polyethylene resin composition is 150 ppm or more and 2000 ppm or less.

2.  The foamable laminate according to claim 1, wherein the polyethylene-based resin layer (I) satisfies the following property (a-3)':
    (a-3)' the oxygen induction time (OIT) at 180°C, as determined according to JIS K6774 (1998), Annex 2, and under the further measurement conditions indicated in the description, is 30 minutes or more and less than 190 minutes.

3.  The foamable laminate according to claim 1
    wherein the polyethylene-based resin layer (I) satisfies the following properties (a-1)' and (a-3)':

    (a-1)' the melt flow rate (MFR) of the polyethylene-based resin (A) as measured in accordance with JIS K7210 (190°C, a load of 21.18N) is 9 g/10 minutes or more and less than 20 g/10 minutes,
    (a-3)' the oxygen induction time (OIT) at 180°C, as determined according to JIS K6774 (1998), Annex 2, and under the further measurement conditions indicated in the description, is 10 minutes or more and less than 80 minutes.

4.  The foamable laminate according to any one of claims 1 to 3, wherein the polyethylene-based resin (A) is any one or more of high-pressure radical polymerization process low-density polyethylene and an ethylene copolymer.

5.  The foamable laminate according to any one of claims 1 to 3, wherein the polyethylene-based resin (A) is a mixture of high-pressure radical polymerization process low-density polyethylene and an ethylene-$\alpha$-olefin copolymer.

6.  The foamable laminate according to any one of claims 1 to 5, wherein the amount of the antioxidant in the polyethylene-based resin layer (I) is 300 ppm or more and less than 2000 ppm.

7. The foamable laminate according to any one of claims 1 to 5, wherein the amount of the antioxidant in the polyethylene-based resin layer (I) is 300 ppm or more and less than 650 ppm.

8. The foamable laminate according to any one of claims 1 to 7, wherein the melting point of the polyethylene-based resin (A) (Tm(a)) and the melting point of the thermoplastic resin (B) (Tm(b)) satisfy the following relational formula (formula 1):

$$Tm(b) - Tm(a) \geq 10 \qquad (formula\ 1).$$

9. A foamed converted paper wherein the polyethylene-based resin layer (I) of the foamable laminate according to any one of claims 1 to 8 is in a foamed state.

10. A heat insulating container in a state that it is formed of the foamed converted paper according to claim 9.


**Patentansprüche**

1. Schäumbares Laminat, umfassend: eine Harzschicht (I) auf Polyethylenbasis auf einer Seite eines Substrats, hauptsächlich aufgebaut aus Papier; und eine thermoplastische Harzschicht (II), umfassend ein thermoplastisches Harz (B), auf der anderen Seite des Substrats,

wobei die auf Polyethylen basierende Harzschicht (I) eine Schicht ist, die durch einen Dampf, der durch Erwärmen aus dem Substrat freigesetzt wird, aufschäumbar ist,
die thermoplastische Harzschicht (II) eine Schicht ist, die befähigt ist, einen vom Substrat freigesetzten Dampf zurückzuhalten, und
die thermoplastische Harzschicht (II) ein thermoplastisches Harz (B) mit der folgenden Beschaffenheit (b-1) umfasst:
(b-1) der Schmelzpunkt (Tm(b)) liegt zwischen 100 und 140°C, und

wobei die Polyethylen basierende Harzschicht (I) ein Polyethylen basierendes Harz (A) und ein Antioxidans umfasst und die folgenden Eigenschaften (a-1) bis (a-5) erfüllt:

(a-1) die Schmelzflussrate (MFR) des Polyethylen basierenden Harzes (A), gemessen gemäß JIS K7210 (190 °C °, eine Last von 21,18 N), beträgt 7 g/10 Minuten oder mehr und weniger als 20 g/10 Minuten,
(a-2) die Dichte des Polyethylen basierenden Harzes (A) gemäß JIS K7112 bei einer Testtemperatur von 23°C beträgt 0,900 bis 0,930 g/cm$^3$,
(a-3) die Sauerstoffinduktionszeit (OIT) bei 180°C, bestimmt gemäß JIS K6774 (1998), Anhang 2, und unter den in der Beschreibung angegebenen weiteren Messbedingungen, beträgt 10 Minuten oder mehr und weniger als 190 Minuten,
(a-4) der Memory-Effekt (ME) des Polyethylen basierenden Harzes (A), gemessen mit einem Schmelzindexgerät zur Verwendung in JIS K7210 und unter den Bedingungen einer Zylindertemperatur von 240°C und einer Extrusionsleistung mit konstanter Geschwindigkeit von 3 g/Minute und unter den in der Beschreibung angegebenen weiteren Messbedingungen ist kleiner als 2,0,
(a-5) die Menge des Antioxidans in der Polyethylenharzzusammensetzung beträgt 150 ppm oder mehr und 2000 ppm oder weniger.

2. Schäumbares Laminat nach Anspruch 1, wobei die Polyethylen basierende Harzschicht (I) die folgende Eigenschaft (a-3)' erfüllt:
(a-3)' die Sauerstoffinduktionszeit (OIT) bei 180°C, bestimmt gemäß JIS K6774 (1998), Anhang 2, und unter den in der Beschreibung angegebenen weiteren Messbedingungen, beträgt 30 Minuten oder mehr und weniger als 190 Minuten.

3. Schäumbares Laminat nach Anspruch 1,
wobei die Polyethylen basierende Harzschicht (I) die folgenden Eigenschaften (a-1)' und (a-3)' erfüllt:

(a-1)' die Schmelzflussrate (MFR) des Polyethylen basierenden Harzes (A), gemessen gemäß JIS K7210 (190°C, eine Belastung von 21,18 N), beträgt 9 g/10 Minuten oder mehr und weniger 20 g/10 Minuten,

(a-3)' die Sauerstoffinduktionszeit (OIT) bei 180°C, bestimmt gemäß JIS K6774 (1998), Anhang 2, und unter den in der Beschreibung angegebenen weiteren Messbedingungen, beträgt 10 Minuten oder mehr und weniger als 80 Minuten.

4. Schäumbares Laminat nach einem der Ansprüche 1 bis 3, wobei das auf Polyethylen basierende Harz (A) eines oder mehrere von einem Hochdruck-Radikalpolymerisationsverfahren-Polyethylen niedriger Dichte und einem EthylenCopolymer ist.

5. Schäumbares Laminat nach einem der Ansprüche 1 bis 3, wobei das auf Polyethylen basierende Harz (A) ein Gemisch aus einem Hochdruck-Radikalpolymerisationsverfahren-Polyethylen niedriger Dichte und einem Ethylen-α-Olefin-Copolymer ist.

6. Schäumbares Laminat nach einem der Ansprüche 1 bis 5, wobei die Menge des Antioxidans in der Polyethylen basierenden Harzschicht (I) 300 ppm oder mehr und weniger als 2000 ppm beträgt.

7. Schäumbares Laminat nach einem der Ansprüche 1 bis 5, wobei die Menge des Antioxidans in der Polyethylen basierenden Harzschicht (I) 300 ppm oder mehr und weniger als 650 ppm beträgt.

8. Schäumbares Laminat nach einem der Ansprüche 1 bis 7, wobei der Schmelzpunkt des Polyethylen basierenden Harzes (A) (Tm(a)) und der Schmelzpunkt des thermoplastischen Harzes (B) (Tm(b)) die folgende Beziehungsformel (Formel 1) erfüllen:

$$\text{Tm(b)} - \text{Tm(a)} \geq 10 \qquad \qquad (\text{Formel 1}).$$

9. Geschäumtes, verarbeitetes Papier, wobei die auf Polyethylen basierende Harzschicht (I) des schäumbaren Laminats gemäß einem der Ansprüche 1 bis 8 in einem geschäumten Zustand ist.

10. Wärmeisolierender Behälter in einem Zustand, in dem er aus dem geschäumten, verarbeiteten Papier gemäß Anspruch 9 gebildet ist.

**Revendications**

1. Stratifié expansible comprenant : une couche de résine à base de polyéthylène (I) sur un côté d'un substrat principalement composé de papier ; et une couche de résine thermoplastique (II) comprenant une résine thermoplastique (B) sur l'autre côté du substrat,

dans lequel la couche de résine à base de polyéthylène (I) est une couche expansible par une vapeur libérée du substrat par chauffage,
la couche de résine thermoplastique (II) est une couche capable de retenir une vapeur libérée du substrat, et
la couche de résine thermoplastique (II) comprend une résine thermoplastique (B) ayant la nature suivante (b-1) :
(b-1) le point de fusion (Tm(b)) va de 100 à 140 °C, et
dans lequel la couche de résine à base de polyéthylène (I) comprend une résine à base de polyéthylène (A) et un antioxydant, et satisfait les propriétés suivantes (a-1) à (a-5) :

(a-1) l'indice de fluidité (MFR) de la résine à base de polyéthylène (A) tel que mesuré conformément à JIS K7210 (190°C, une charge de 21,18 N) est de 7 g/10 minutes ou plus et moins de 20 g/10 minutes,
(a-2) la densité de la résine à base de polyéthylène (A) conformément à JIS K7112 à une température d'essai de 23 °C va de 0,900 à 0,930 g/cm$^3$,
(a-3) le temps d'induction à l'oxydation (OIT) à 180 °C, tel que déterminé conformément à JIS K6774 (1998), Annexe 2, et dans les conditions de mesure supplémentaires indiquées dans la description, est de 10 minutes ou plus et moins de 190 minutes,
(a-4) l'effet mémoire (ME) de la résine à base de polyéthylène (A), tel que mesuré en utilisant un fluidimètre devant être utilisé dans JIS K7210 et dans des conditions d'une température de cylindre de 240 °C et d'une sortie d'extrusion à débit constant de 3 g/minute et dans les conditions de mesure supplémentaires indiquées dans la description, est inférieur à 2,0,
(a-5) la quantité de l'antioxydant dans la composition de résine de polyéthylène est de 150 ppm ou plus et 2000 ppm ou moins.

**2.** Stratifié expansible selon la revendication 1, dans lequel la couche de résine à base de polyéthylène (I) satisfait la propriété suivante (a-3)' :
(a-3)' le temps d'induction à l'oxydation (OIT) à 180 °C, tel que déterminé conformément à JIS K6774 (1998), Annexe 2, et dans les conditions de mesure supplémentaires indiquées dans la description, est de 30 minutes ou plus et moins de 190 minutes.

**3.** Stratifié expansible selon la revendication 1,
dans lequel la couche de résine à base de polyéthylène (I) satisfait les propriétés suivantes (a-1)' et (a-3)' :

(a-1)' l'indice de fluidité (MFR) de la résine à base de polyéthylène (A) tel que mesuré conformément à JIS K7210 (190°C, une charge de 21,18 N) est de 9 g/10 minutes ou plus et moins de 20 g/10 minutes,
(a-3)' le temps d'induction à l'oxydation (OIT) à 180 °C, tel que déterminé conformément à JIS K6774 (1998), Annexe 2, et dans les conditions de mesure supplémentaires indiquées dans la description, est de 10 minutes ou plus et moins de 80 minutes.

**4.** Stratifié expansible selon l'une quelconque des revendications 1 à 3, dans lequel la résine à base de polyéthylène (A) est l'un quelconque ou plusieurs de polyéthylène basse densité à processus de polymérisation radicalaire haute pression et d'un copolymère d'éthylène.

**5.** Stratifié expansible selon l'une quelconque des revendications 1 à 3, dans lequel la résine à base de polyéthylène (A) est un mélange de polyéthylène basse densité à processus de polymérisation radicalaire haute pression et d'un copolymère d'éthylène-$\alpha$-oléfine.

**6.** Stratifié expansible selon l'une quelconque des revendications 1 à 5, dans lequel la quantité de l'antioxydant dans la résine à base de polyéthylène (I) est de 300 ppm ou plus et moins de 2000 ppm.

**7.** Stratifié expansible selon l'une quelconque des revendications 1 à 5, dans lequel la quantité de l'antioxydant dans la couche de résine à base de polyéthylène (I) est de 300 ppm ou plus et moins de 650 ppm.

**8.** Stratifié expansible selon l'une quelconque des revendications 1 à 7, dans lequel le point de fusion de la résine à base de polyéthylène (A) (Tm(a)) et le point de fusion de la résine thermoplastique (B) (Tm(b)) satisfont la formule relationnelle suivante (formule 1) :

$$\text{Tm(b) - Tm(a)} \geq 10 \qquad \text{(formule 1)}.$$

**9.** Papier converti expansé, dans lequel la couche de résine à base de polyéthylène (I) du stratifié expansible selon l'une quelconque des revendications 1 à 8 est dans un état expansé.

**10.** Récipient calorifuge dans un état tel qu'il est formé du papier converti expansé selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010285586 A
- JP 48032283 B
- JP 57110439 A
- JP 7232774 A

- JP 10128928 A
- JP 2007168178 A
- JP 2008105747 A